# EUROPEAN PATENT APPLICATION

(11) **EP 4 656 059 A1**
(43) Date of publication of application: **03.12.2025**
(21) Application number: 24178937.9
(22) Date of filing: 29.05.2024
(51) Int. Cl.: A23J 1/00, A23J 3/14, A23J 3/20, A23J 3/22, A23L 29/238, A23L 29/256, A23L 33/185, A23L 33/195

(54) **VEGETARIAN MEAT SUBSTITUTE**

(71) Applicant: Planetary SA, 1223 Cologny Geneva (CH)
(72) Inventor: BRANDES, David, 1222 Vésenaz (CH); AKINTOYE, Muyiwa, Guisborough, TS14 8EZ (GB)
(74) Representative: KATZAROV S.A.

(57) **Abstract**

The present invention relates to a vegetarian (and vegan) meat substitute composition, preferably a chicken substitute composition, composed of (1) a binder comprising a potato protein that is rich in protein inhibitors and poor in patatin and a source of carrageenan and 2) mycoprotein and/or a plant protein different from the potato protein present in the binder.

## Description

### Technical field

The present invention relates to a vegetarian (and vegan) meat substitute composition, preferably a chicken substitute composition, comprising (1) a binder comprising a potato protein that is rich in protein inhibitors and poor in patatin and a source of carrageenan and 2) mycoprotein and/or a plant protein different from the potato protein present in the binder.

### Background of the invention

Vegetarian and vegan diets are spreading, due to growing environmental and nutritional concerns. This makes the development of vegetarian and vegan meat substitutes essential. Such vegetarian meat substitutes have been produced in the prior art based on diverse plant and fungal proteins. Fungal proteins have been widely used, for example due to their contribution to fibrous structure and the possibility to produce them in a sustainable way.

Fungal biomass has been used in the prior in combination with potato protein. Okeudo-Cogan M. C et al., Food Hydrocolloids 149 (2024) 109569), describes the use of potato protein as an alternative to egg white protein in mycoprotein-based meat alternatives. Potato protein is described as beneficial due to the presence of patatin, a protein having physical and chemical properties very close to ovalbumin, which provide both proteins with a similar viscoelastic behaviour. It is namely mentioned that both patatin and ovalbumin have similar number of amino acids, molecular weight and isoelectric point. The used potato protein is thus a patatin-rich fraction of potato protein (Solanic^{®} 200). Meat alternative compositions based on mycoprotein and a patatin-rich potato protein isolate, such as described in this article however suffer from undesirable off-flavours, such as a metallic or fishy off-notes. It is therefore desirable to provide alternative meet replacement compositions having improved taste properties.

### Summary of the invention

In a first aspect, the invention provides a vegetarian meat substitute comprising 1) a binder comprising a potato protein and 2) mycoprotein and/or a plant protein different from the protein present in the binder, wherein the amount of protein inhibitors in the potato protein present in the binder is higher than the patatin content and wherein the binder further comprises a source of carrageenan.

In a second aspect, the invention provides a process for the preparation of a vegetarian meat substitute comprising 1) a binder comprising a potato protein having a protein inhibitors content higher than the patatin content and a source of carrageenan and 2) mycoprotein and/or a plant protein that is different from the protein present in the binder, comprising the steps of
a) mixing a wet source of the mycoprotein and/or plant protein that is different from the potato protein present in the binder with
   a. a source of potato protein having a protein inhibitors content higher than the patatin content and
   b. a source or carrageenan; and
b) heating the mixture obtained in step a) to form a gel.

In a third aspect, the invention provides a vegetarian meat substitute obtained or obtainable by the process of the invention.

In a fourth aspect, the invention provides a food product comprising a vegetarian meat substitute of the invention.

### Detailed description of the invention

The present inventors have surprisingly developed a vegetarian meat alternative based on mycoprotein or plant protein and a binder comprising a potato protein isolate fraction that is rich in protein inhibitors and poor in patatin and further comprising a source of carrageenan. Such product is advantageously characterized by a good texture, resembling meaty texture and devoid of undesirable off-notes, in particular devoid of metallic, cereal, legume and fishy off-notes. The present meat substitute is advantageously also vegan.

Thus, the present invention relates to a vegetarian meat substitute comprising 1) a binder comprising a potato protein and 2) mycoprotein and/or a plant protein different from the protein present in the binder, wherein the amount of protein inhibitors in the potato protein present in the binder is higher than the patatin content and wherein the binder further comprises a source of carrageenan.

The present vegetarian meat substitute is suitable as a substitute for any animal meat product due to its bland taste, that can accommodate a variety of meat flavours and its good ability to deliver such flavours. It is particularly adapted as a substitute for larger pieces of meat, such as steak, filet and the like, preferably for larger pieces of poultry, preferably chicken, more particularly chicken filet due to its firm and fibrous, however still juicy, texture.

The potato protein present in the binder is a potato protein rich in protein inhibitors and poor in patatin. When used as such, the potato proteins rich in protein inhibitors and poor in patatin do not gel under conditions applied in the preparation of a meat substitute, leading to a lack of structure of the meat substitute. However, such potato protein is advantageous in that it has a bland taste and does not confer the characteristic metallic, cereal, legume and fishy off-notes observed when a potato protein rich in patatin is used. The present inventors have overcome the disadvantage of the absence of gelling by the combination of the potato protein with a source of carrageenan and optionally wheat gluten. This combination advantageously provides a meat analogue with a meat-like texture and no off-note. The binder is further advantageous in that is gels only upon heating which makes it possible to use it even in applications where the ingredients require prolonged mixing, for example when the product is based on poorly soluble plant proteins. This avoids the drawback of previously described meat substitutes produced with plant proteins and alginate, wherein alginate gels quickly at ambient temperature and mixing prolonged beyond the start of the gelling involves breaking of the gel and subsequent loss of texture and fibrosity.

The potato protein rich in protease inhibitors and poor in patatin is defined as a potato protein that comprise more than 50wt% protease inhibitors and less than 50wt% of patatin, based on the total weight of the potato protein isolate. Preferably, the potato protein comprises more than 60wt% protease inhibitors and less than 40wt% of patatin, more preferably more than 65wt% protease inhibitors and less than 35wt% of patatin, more preferably more than 70wt% protease inhibitors and less than 30wt% of patatin, more preferably more than 75wt% protease inhibitors and less than 25wt% of patatin, more preferably more than 80wt% protease inhibitors and less than 20wt% of patatin, more preferably more than 85wt% protease inhibitors and less than 15wt% of patatin, more preferably more than 90wt% protease inhibitors and less than 10wt% of patatin, even more preferably more than 95wt% protease inhibitors and less than 5wt% of patatin, based on the total weight of the potato protein. Most preferably the potato protein does not comprise detectable amounts of patatin.

In a preferred aspect, the potato protein has a molecular weight below 40KDa, preferably below 30KDa, more preferably below 25KDa, most preferably of 20-30, 16 and less than 10KDa. In another preferred aspect, the potato protein is soluble at acidic pH, preferably at a pH of 6 or less, more preferably of 5 or less, even more preferably of 4 or less, most preferably of 3 or less. In a further preferred aspect, the potato protein is characterized by a zeta potential in aqueous solution between -10 and 30mV within the range of pH extending from 3 to 9. In still another preferred aspect, the potato protein is characterized by a positive zeta potential in aqueous solution at neutral and acidic pH, preferably at pH 7 and by an isoelectric point at pH 8.

The amount of potato protein in the vegetarian meat substitute is preferably of 10 to 30wt%, preferably of 13 to 30 wt%, more preferably 15 to 28wt%, even more preferably 18 to 25wt%, most preferably 21 to 22wt%, based on the total solids content of the vegetarian meat substitute.

Omitting the herein described potato protein from the recipe of the vegetarian meat substitute of the invention significantly reduces the fibrosity of the product, makes the meat substitute undesirably gummy, with a slight bitter back-note.

The source of carrageenan is preferably a source of kappa-carrageenan. Kappa-carrageenan is advantageous in that it is capable of forming strong gels. Carrageenan is commercially available and is typically obtained by extraction from a variety of red seaweed varieties.

Refined carrageenan, preferably refined kappa-carrageenan provides very good texture and taste to the meat substitute and is therefore suitable for the purpose of the present invention. It would however be desirable to provide a source of carrageenan that is less processed, because refined and processed ingredients are not well accepted by consumers nowadays. To solve this problem, the present inventors have found that seaweed flour was a suitable source of carrageenan, such as kappa carrageenan, which provided, in combination with the potato protein, a binder capable of forming a meat substitute having a good meaty texture and taste, while meeting the customers' expectations of ingredients that are of natural origin and processed as little as possible. Such binder advantageously works with a variety of fungal and/or plant proteins, such as described herein below.

Preferably, the seaweed flour is a seaweed flour, wherein the seaweed is selected from *Kappaphycus alvarezii, Eucheuma cottonii, Eucheuma denticulatum, Chondrus crispus,* seaweed of the *Gigartina* genus (preferably at the gametophytic stage), *Betaphycus gelatinum, Sarcothalia crispata, Mazzaella laminaroides, Hypnea musciformis* and mixtures thereof. Preferred seaweeds of the *Gigartina* genus are *Gigartina skottsbergii* and *Gigartina canaliculata.* Most preferably, the seaweed flour is *Kappaphycus alvarezii and*/*or Eucheuma cottonii* flour, as these seaweeds are common sources of kappa-carrageenan.

In a particular aspect, the seaweed is a red seaweed from the Rhodophyceae class, preferably *Chondrus crispus.*

Preferably, the seaweed flour is
dispersible in cold aqueous media such as aqueous solutions or dispersions and oil-in-water emulsions and
at least partially soluble at a temperature of 70°C.

In another preferred aspect, the seaweed flour has a particle size characterized by a D90 between 10 and 300 µm, preferably between 50 and 200 µm, more preferably 70 and 180 µm, even more preferably 100 to 150 µm, most preferably 120 to 130 µm, such as 125 µm, as measured by sieving.

The source of carrageenan is preferably present in an amount of 1 to 15wt%, preferably 01.5 to 12wt%, more preferably 2 to 10wt%, most preferably 4 to 9wt%, based on the total solids content of the vegetarian meat substitute. When the source of carrageenan is refined carrageenan, preferably refined kappa-carrageenan, such source of carrageenan is preferably present is present in an amount of 1 to 10 wt%, preferably 1.5 to 8wt%, event more preferably 2 to 5wt%, most preferably 3 to 5 wt%, based on the total solids content of the vegetarian meat substitute. When the source of carrageenan is seaweed flour, such seaweed flour is preferably present in an amount of 4 to 15wt%, preferably 5 to 10wt%, most preferably 7 to 9wt%, based on the total weight of the vegetarian meat substitute.

Omitting the carrageenan source in the present meat substitute very negatively impacts the texture of the product, as this negatively impacts the fibrosity and the juiciness of the product. The texture of the product without the carrageenan source more closely resembles ground meat and cannot be used as credible replacement for a piece of meat, such as a filet.

The plant protein that is different from the potato protein present in the binder can be any type of plant protein. However, it is preferably not a potato protein. The plant protein can for example be a seed protein, a nut protein, a cereal protein, a bean protein, a legume protein and the like, or mixtures thereof. Specific examples of plant proteins include pea, soy, wheat, lupin, canola, almond, cashew, oat and rice proteins and mixtures thereof. Optionally, the plant protein is textured plant protein, granulated/ground textured plant protein and mixtures thereof.

The mycoprotein is preferably in the form of a filamentous fungus or of a fungal mycelium biomass. Preferably, it is a filamentous fungus or a fungal mycelium belonging to a division selected from the group consisting of Blastocladiomycota, Chytridiomycota, Glomeromycota, Microsporidia, Neocallimastigomycota, Dikarya, Ascomycota, Pezizomycotina, Saccharomycotina, Taphrinomycotina, Basidiomycota, Agaricomycotina, Pucciniomycotina, Ustilaginomycotina, Entomophthoromycotina, Mucor and Kickomycotina. Preferably the filamentous fungus or fungal mycelium belongs to a family selected from the group consisting of Mucoraceae, Ustilaginaceae, Hericiaceae, Polyporaceae, Grifolaceae, Lyophyllaceae, Strophariaceae, Lycoperdaceae, Agaricaceae, Pleurotaceae, Physalacriaceae, Omphalotaceae, Tuberaceae, Morchellaceae, Sparassidaceae, Nectriaceae, Bionectriaceae, Cordycipitaceae, Incertomyae, Meruliaceae, Entolomataceae, Nidulariaceae, Fomitopsidaceae, Phanerochaetaceae, Mycenaceae. Preferably it belongs to a genus selected from Rhizopus, Ustilago, Hericululm, Polyporous, Grifola, Hypsizygus, Calocybe, Pholiota, Calvatia, Agaricus, Stropharia, Hypholoma, Pleurotus, Tuber, Morchella, Sparassis, Fusarium, Disciotis, Clonostachys, Cordyceps, Trametes, Ganoderma, Flammulina, Lentinula, Lucoagaricus, Bjerkandera, Clitopilus, Cyathus, Ischnoderma, Kuehneromyces, Letinula, Lentinus, Macrofungus, Marasmius, Nidula, Ossicaulis, Phanerochaetes, Ossicaulis, Panellus, Postia, Pycnoporus, Tyromyces, Wolfiporia. More preferably, it belongs to a species selected from *Rhizopus oligosporus, Ustilago esculenta, Hericululm erinaceus, Polyporous squamosus,* Polyporus melanopus, *Grifola fondrosa, Hypsizygus marmoreus, Hypsizygus ulmarius, Calocybe gambosa, Pholiota nameko, Calvatia gigantea, Agaricus bisporus, Stropharia rugosoannulata, Hypholoma lateritium, Hypholoma capnoides, Pleurotus eryngii, Pleurotus ostreatus, Pleurotus citrinopiheatus, Pleurotus ostreatus,* var. *Columbinus, Pleurotus djamor roseus, Pleurotus sapidus, Pleurotus sp. florida, Tuber borchii, Morchella esculenta, Morchella conica, Morchella importuna, Sparassis crispa, Fusarium venenatum, Fusarium oxysporum, Disciotis venosa, Clonostachys rosea, Cordyceps militaris, Trametes versicolor, Ganoderma lucidum, Ganoderma applanatum, Flammulina velutipes, Lentinula erodes, Pleurotus djamor, Pleurotus ostreatus, Lucoagaricus* spp., *Bjerkandera adusta, Clitopilus passeckerianus, Cyathus helenae, Ischnoderma benzoinum, Kuehneromyces mutabilis, Letinula erodes, Lentinus squarrosulus, Macrofungus cohortalis, Marasmius scorodonius, Marasmius scorodonius, Nidula niveo-tomentosa, Phanerochaete chrysosporium, Ossicaulis lignatilis, Panellus serotinus, Postia caesia, Pycnoporus sanguineus, Tyromyces chioneus, Wolfiporia cocos.*

The most preferred genus for the purpose of the present invention is Fusarium, and preferred species is *Fusarium venenatum.*

The mycoprotein is preferably present in an amount of 35 to 65wt%, preferably 40 to 60wt%, most preferably 45 to 55wt% based on the total solids content of the vegetarian meat substitute.

In a particular embodiment of the invention, the vegetarian meat substitute further comprises an insoluble fibre. The addition of an insoluble fibre is advantageous to provide an additional fibrous texture to the meat substitute and reduce its pastiness, thus more closely mimicking the texture of animal meat. Any insoluble fibre of vegetal origin can be used. Preferably, the insoluble fibre is psyllium fibre, oat fibre or a mixture thereof. Most preferably it is psyllium fibre. Psyllium is particularly effective in avoiding pastiness of the meat substitute and advantageously does not confer any off-note to the product, in particular no bitter back-note.

In another particular embodiment of the invention, the vegetarian meat substitute comprises wheat gluten. When present, wheat gluten is preferably in an amount of 0.5 to 5wt%, preferably 0.5 to 4wt%, more preferably 0.5 to 3wt%, even more preferably 1 to 3wt%, most preferable 2 to 3wt%, based on the total weight of the vegetarian meat substitute. Gluten is advantageous in that it positively contributes to increasing the juicy texture and the overall fibrosity of the meat substitute.

The present meat substitutes advantageously provide for a good delivery of added flavours. Thus, in a particular aspect, the vegetarian meat substitute further comprises a savoury flavour, such as a non-meat meat favour, preferably a non-meat beef, pork, lamb or poultry flavour, preferably a non-meat poultry flavour, most preferably a non-meat chicken flavour. By "non-meat meat flavour" it is meant that the flavour is not from animal origin, bur provides a flavour that mimics the flavour of animal meat.

Any additive or further nutrient can be added to the present meat substitute, as appropriate to obtain the desired product type and nutritional content. For example, the meat substitute can be supplemented with vitamins and/or minerals to provide additional nutritional value to the product. Also, additives such as colorant, preservative and/or taste enhancers can be added as desired by the formulator.

The present meat substitutes are advantageously used as ingredients in any type of food products comprising meat, such as pre-cooked dishes, in particular in pasta, pizza, soups, simmered dishes, salads, poke bowls, sandwiches, stir fry, pies and the like.

The vegetarian meat substitute of the invention can be obtained by a process comprising the steps of
a) mixing a wet source of the mycoprotein and/or plant protein that is different from the potato protein present in the binder with
   i. a source of potato protein having a protein inhibitors content higher than the patatin content and
   ii. a source or carrageenan; and
b) heating the mixture obtained in step a) to form a gel.

The mycoprotein and/or plant protein that is different from the potato protein present in the binder, the potato protein having a protein inhibitors content higher than the patatin content and the source or carrageenan are all as defined herein above.

Any optional ingredient mentioned herein above can be added together with the ingredients admixed in step a), including the flavour. No separate successive mixing step is necessary. The mixing step is preferably performed at ambient temperature or below, most preferably at ambient temperature.

In preferred aspect, all ingredients except the mycoprotein and/or plant protein that is different from the potato protein present in the binder are premixed to form the binder, preferably also comprising the optional ingredients, and the premix is added to the mycoprotein and/or plant protein that is different from the potato protein present in the binder. This is advantageous to provide a more homogeneous mixture of all ingredients.

The wet mycoprotein source can be provided in the form of wet biomass or in the form of dried biomass reconstituted in an aqueous medium. The wet mycoprotein source used in step a) preferably has a total solids content of 10 to 40wt%, preferably 15 to 35wt%, more preferably 20 to 30 wt%, even more preferably 20 to 28wt%, most preferably 23 to 25%.

The wet source of plant protein that is different from the potato protein present in the binder, is preferably a dry plant protein concentrate or isolate reconstituted in water. Preferably, the plant protein concentrate or isolate has a total protein content of at least 85wt%, preferably at least 90wt%, most preferably at least 93wt%, based on the total weight of the plant protein concentrate or isolate.

Preferably step a) is performed by mechanically blending the ingredients until all the ingredients are thoroughly mixed and the mixture is homogeneous. Preferably the ingredients are blended for a duration of 30 to 300s, preferably 60 to 240s, more preferably 60 to 180s, most preferably 60 to 120s.

In another preferred aspect, the mixture obtained in step a) is left to stand before it is heated in step b). Preferably, it is left to stand for 1 to 10 minutes, preferably 2 to 9 minutes, more preferably 3 to 7 minutes, even more preferably 4 to 6 minutes, most preferably 5 minutes.

In a further preferred aspect, the mixture is blended a second time after the standing time and before the heating step b). Preferably the ingredients are blended for a duration of 10 to 300s, preferably 20 to 180s, more preferably 30 to 120s, most preferably 60s. The mixing step is preferably performed at ambient temperature or below, most preferably at ambient temperature.

In another preferred aspect, the mixture obtained in step a), optionally after the heating and/or standing step(s), is shaped into the shape of the desired vegetarian meat substitute. The shaping step is preferably performed by moulding or pressing. The shaping step is preferably performed at ambient temperature or below.

The heating step is preferably performed at a relative humidity level of at least 60%, preferably at least 70%, more preferably at least 80%, more preferably at least 90%, even more preferably at least 95%, most preferably 100%. Furthermore, the drying temperature is preferably of 50 to 200°C, preferably 60 to 150 °C, more preferably 70 to 130°C, even more preferably 80 to 120°C, most preferably 90 to 110°C, such as 100°C. The drying time is preferably of 5 to 60 minutes, preferably 10 to 30 minutes, more preferably 15 to 25 minutes, most preferably 20 minutes.

In another preferred aspect, the process further comprises a step c) of freezing the obtained vegetarian meat substitute obtained in step b), preferably in a blast freezer. The duration of the freezing step is preferably of 30 to 300 minutes, preferably 60 to 240 minutes, more preferably 90 to 180 minutes, preferably 120 minutes.

Preferably the vegetarian meat substitute is then packed, preferably under vacuum, in any suitable way, preferably in a sealed plastic bag.

The vegetarian meat substitute is then preferably kept under freezing or refrigeration until preparation for consumption. The taste of the vegetarian meat substitute is optimal when the product is defrosted and then pan fried in a pan with fat or oil, typically for 3-5 minutes and flipped frequently until both side are browned to the desired level.

### Examples

### Example 1: Comparison of chicken filet substitutes

Chicken filet substitutes were prepared having the ingredients listed in Table 1, in the amounts indicated (percentage by weight):

**Table 1: chicken substitute compositions**

| | **Inv.** | **Inv.** | **Inv.** | **Inv.** | **Inv.** | **Comp.** | **Comp.** | **Inv.** |
|---|---|---|---|---|---|---|---|---|
| | **R32** | **R33** | **R34** | **R36** | **R37** | **R38** | **R39** | **R43** |
| Wet myco-protein¹ | 88 | 87 | 89 | 88 | 88 | 90 | 90 | 88 |
| Potato protein isolate² | 5 | 5 | 5 | 5 | 4 | 0 | 5 | 5 |
| Non-meat Chicken flavor | 3 | 3 | 3 | 3 | 3 | 3 | 3 | 3 |
| Wheat gluten | 2 | 2 | 2 | 0 | 2 | 2 | 2 | 0 |
| Refined kappa carrageenan³ | 0 | 0 | 1 | 0 | 0 | 1 | 0 | 0 |
| Seaweed flour⁴ | 2 | 2 | 0 | 2 | 3 | 4 | 0 | 2 |
| psyllium fibre⁵ | 0 | 1 | 0 | 2 | 0 | 0 | 0 | 0 |
| oat fibre⁶ | 0 | 0 | 0 | 0 | 0 | 0 | 0 | 2 |
| Total | 100 | 100 | 100 | 100 | 100 | 100 | 100 | 100 |

| | | | | | | | | |
|---|---|---|---|---|---|---|---|---|
| *1) Fusarium venenatum* biomass, 25wt% total solids and 13wt% protein; Origin: Planetary Group SA, Geneva, Switzerland; 2) Solanic^{®} 300 (fraction rich in protease inhibitors; see Tan et al., Food Hydrocolloids 137 (2023) 108356) ), Avebe Ltd, The Netherlands, 3) Special Ingredients Ltd (United Kingdom) 4) *Chondrus crispus* 5) Campus S.R.L Italy 6) Promoat fibre (origin: Lantmännen Functional Foods, Sweden) | | | | | | | | |

The mycoprotein was provided in the form of wet *Fusarium venenatum* biomass, obtained by fermentation process The obtained biomass had a total solids content of 23wt% and a protein content of 13wt%, based on the total biomass.

The mycoprotein source was weighed and placed in the bowl of a K Hook mixer (origin Kenwood). The other powdered ingredients (potato protein isolate, wheat gluten, refined kappa carrageenan, seaweed flour, psyllium fibre and oat fibre, whenever present), were weight and premixed. The obtained premix was added to the mixing bowl with the mycoprotein source. Using the K Hook, the mycoprotein source and the premix were blended for 60-120 seconds (at speed 4) until all the ingredients were thoroughly mixed.

The obtained mixture was left on the side to sit for 5 minutes to ensure full hydration of all the ingredients. After 5 minutes standing, the mixture wax blended again for 60 seconds.

The chicken filets shapes were then formed using silicon moulds. After removing the shapes from the silicon mould, the fillets were cooked in a steamer oven at 100°C and 100% humidity for 20 minutes. The cooked shapes were then placed in a blast freezer for 2 hours. After that the filets were placed into plastic bags, sealed under vacuum and stored in a domestic freezer for 10-14 days.

To evaluate the products, the samples were defrosted and pan fried in a shallow pan with oil for 3-5 minutes, flipping them frequently, until both sides were lightly browned. The filets were then sliced and subjected to sensory assessment.

The recipes were tasted by a trained individual experienced in tasting meat substitutes, who was asked to describe the sensory attributes of each recipe. The results were as follows.
R32, R33, R34 and R37 were found firm, fibrous, moist, not pasty, exhibited a great flavour delivery, no off taste and were found pleasant to eat.

R36 was very close to R32, R33, R34 and R37, with slightly less juiciness but increased fibrosity and reduced pastiness, due to the addition of psyllium fibre.
R38 was found firm but very gummy, it had significantly reduced fibrosity and had a slight bitter back note. This is associated with the absence of potato protein isolate in this recipe.

R39 was found firm, dry, like shredded chicken. It exhibited very little pastiness but little fibrosity. It was quite bland in taste. Such disadvantageous characteristics are due to the absence of a carrageenan source in the recipe.

R43 was found firm, fibrous, slightly pasty but juicy. It exhibited a slightly bitter back note. This result demonstrates that the presence of oat fibre provides a reasonably good product, even though psyllium fibre provided a better meat substitute than the oat fibre present in this recipe, due to a better taste.

In conclusion, the meat substitutes of the invention (R32, R33, R34, R35, R36, R37 and R43 were devoid of fishy off-note and had a texture resembling that of meat, more particularly of a chicken filet. The presence of the potato protein proved essential to provide the fibrous and non-gummy texture characteristic of a chicken filet. Also, both kappa-carrageenan and seaweed flour were found essential to obtain the fibrous texture mimicking a chicken filet. The presence of an additional insoluble fibre, preferably psyllium fibre further improved the texture of the meat. The texture was also good in the present of wheat gluten.

## Claims

1. A vegetarian meat substitute 1) a binder comprising a potato protein and 2) mycoprotein and/or a plant protein different from the protein present in the binder, wherein the amount of protein inhibitors in the potato protein present in the binder is higher than the patatin content and wherein the binder further comprises a source of carrageenan,

2. The vegetarian meat substitute of claim 1, wherein the potato protein present in the binder comprises more than 60wt% protease inhibitors and less than 40wt% of patatin, more preferably more than 65wt% protease inhibitors and less than 35wt% of patatin, more preferably more than 70wt% protease inhibitors and less than 30wt% of patatin, more preferably more than 75wt% protease inhibitors and less than 25wt% of patatin, more preferably more than 80wt% protease inhibitors and less than 20wt% of patatin, more preferably more than 85wt% protease inhibitors and less than 15wt% of patatin, more preferably more than 90wt% protease inhibitors and less than 10wt% of patatin, even more preferably more than 95wt% protease inhibitors and less than 5wt% of patatin, based on the total weight of the potato protein.

3. The vegetarian meat substitute of claim 1 or 2, wherein the potato protein present in the binder is **characterized by** a molecular weight below 40KDa, preferably below 30KDa, more preferably below 25KDa, most preferably of 20-30, 16 and less than 10KDa.

4. The vegetarian meat substitute of any one of the preceding claims, wherein the potato protein present in the binder is soluble at acidic pH, preferably at a pH of 6 or less, more preferably of 5 or less, even more preferably of 4 or less, most preferably of 3 or less.

5. The vegetarian meat substitute of any one of the preceding claims, wherein the potato protein present in the binder is **characterized by** a zeta potential in aqueous solution between -10 and 30mV in the range of pH extending from 3 to 9.

6. The vegetarian meat substitute of any one of the preceding claims, wherein the potato protein present in the binder is **characterized by** a positive zeta potential in aqueous solution at neutral and acidic pH, preferably at pH 7.

7. The vegetarian meat substitute of any one of the preceding claims, wherein the potato protein present in the binder is **characterized by** an isoelectric point of 8.

8. The vegetarian meat substitute of any one of the preceding claims, wherein the source of carrageenan is a source of kappa-carrageenan, preferably refined kappa-carrageenan or seaweed flour comprising kappa-carrageenan.

9. The vegetarian meat substitute of any one of the preceding claims, further comprising an insoluble fibre, such as psyllium fibre or oat fibre, preferably psyllium fibre.

10. The vegetarian meat substitute of any one of the preceding claims, further comprising wheat gluten.

11. The vegetarian meat substitute of any one of the preceding claims, wherein
a. the potato protein present in the binder is present in an amount of 10 to 30wt%, preferably of 13 to 30 wt%, more preferably 15 to 28wt%, even more preferably 18 to 25wt%, most preferably 21 to 22wt%, based on the total solids content of the vegetarian meat substitute;
b. the source of carrageenan is present in an amount of 1 to 15wt%, preferably 01.5 to 12wt%, more preferably 2 to 10wt%, most preferably 4 to 9wt%, based on the total solids content of the vegetarian meat substitute; and/or
c. the mycoprotein is present in an amount of 35 to 65wt%, preferably 40 to 60wt%, most preferably 45 to 55wt% based on the total solids content of the vegetarian meat substitute.

12. The vegetarian meat substitute of claim 11, wherein
a. the source of carrageenan is refined kappa carrageenan and refined kappa carrageenan is present in an amount of 1 to 10 wt%, preferably 1.5 to 8wt%, event more preferably 2 to 5wt%, most preferably 3 to 5 wt%, based on the total solids content of the vegetarian meat substitute.
b. the source of carrageenan is seaweed flour and seaweed flour is present in an amount of 4 to 15wt%, preferably 5 to 10wt%, most preferably 7 to 9wt%, based on the total weight of the vegetarian meat substitute.

13. The vegetarian meat substitute of any one of the preceding claims, further comprising a savoury flavour, preferably a non-meat meat flavour, preferably a non-meat chicken flavour.

14. A process for the preparation of a vegetarian meat substitute comprising 1) a binder comprising a potato protein having a protein inhibitors content higher than the patatin content and a source of carrageenan and 2) mycoprotein and/or a plant protein that is different from the protein present in the binder, comprising the steps of
a. mixing a wet source of the mycoprotein and/or plant protein that is different from the potato protein present in the binder with
i. a source of potato protein having a protein inhibitors content higher than the patatin content and;
ii. a source or carrageenan; and
b. heating the mixture obtained in step a) to form a gel.

15. A food product comprising the vegetarian meat substitute of any one of claims 1 to 13.
